# EUROPÄISCHE PATENTSCHRIFT

(11) **EP 0 688 998 B1**
(45) Veröffentlichungstag und Bekanntmachung des Hinweises auf die Patenterteilung: **26.09.2001**
(21) Anmeldenummer: 94117763.6
(22) Anmeldetag: 10.11.1994
(51) Int. Cl.: F16P 3/12

(54) **Einrichtung zur Vermeidung des Scherens oder Quetschens eines Fremdkörpers**
Device for avoiding the cutting or crushing of a foreign body
Dispositif pour éviter de découper ou d'écraser un corps étranger

(30) Priorität: 22.06.1994 DE 4421828
(43) Veröffentlichungstag der Anmeldung: 27.12.1995
(73) Patentinhaber: JENOPTIK Aktiengesellschaft, 07743 Jena (DE)
(72) Erfinder: Hübner, Gerd, D-07743 Jena (DE); Heitmann, Michael, D-07747 Jena (DE)
(74) Vertreter: Oehmke, Volker, Dipl.-Math.

(56) Entgegenhaltungen:
- DE-C- 3 606 499
- DE-C- 3 843 478
- DE-C- 4 038 224
- US-A- 4 470 028

## Beschreibung

Die Erfindung betrifft eine Scherkantensicherung für zwei längs einer Scherlinie aneinander vorbei bewegbare Teile.

Sicherheitseinrichtungen zum Vermeiden von Verletzungen und Schäden beim Betreiben von Systemen, bei denen sich zwei Teile in geringem Abstand aneinander vorbei bewegen, sind vor allem aus dem Schwermaschinenbau und Landmaschinenbau bekannt und mit der fortschreitenden Automatisierung in allen Industriebereichen erforderlich, um Mensch und Maschine zu schützen.

Eine erste Methode ist das generelle Absperren der Gefahrenstelle mit Gittern und Gehäusen. Ist das manuelle Eingreifen nicht zu vermeiden, kann bei einer 1-Mann-Bedienung die Zweihandsteuerung eine gute Lösung sein. Halten sich zwangsläufig mehrere Personen im Gefahrenbereich auf oder ist Mehrmaschinenbedienung vorhanden, werden Steuerungen eingesetzt, die entweder das Eingreifen abweisen oder die Maschinenbewegung beenden.

Zum Erkennen der Annäherung eines Körpers werden Sensoren eingesetzt, z. B. als Lichtschranke, Druckschlauch, Kontaktbänder, Bewegungsmelder, Fühler o. ä., deren Signal zum Abschalten oder Bremsen der Maschinenbewegung benutzt wird.

Die DE 34 20 225 A1 verwendet einen sogenannten Endstreifen als mechanischen Sensor in Verbindung mit Schaltern zum Erkennen von Fremdkörpern im Gefahrenbereich eines Hubtisches. Nachteilig kann die Anordnung am beweglichen Teil, die Ausführung der Schalter als Schließer sowie die Unempfindlichkeit größerer Endstreifen bei horizontaler Einwirkung eines Fremdkörpers sein, weil ein seitliches Ausweichen nicht zwangsläufig zur Schaltung führt.

Die DE 36 06 499 C1, DE 38 43 478 C1 und die DE 40 38 224 C1 setzen als Schließkanten-Sicherung eine vorgespannte spezielle Sicherungsleiste aus einer Vielzahl aneinandergereihter Kontaktelemente ein, deren Stromkreis unter Einwirkung äußerer Kraft unterbrochen wird.

Schwierigkeiten entstehen bei Vorhandensein von Winkeln und kleinen Radien. An den Enden der Sicherungsleiste könnten Probleme mit dem Sicherheitsauslauf entstehen.

Die DE 37 25 360 A1, DE 28 54 459 A1 und die DE 41 21 916 A1 haben den gemeinsamen Nachteil des Schließers als Kontaktfunktion oder eines hohen Aufwandes zur Funktionsüberwachung.

In der DE 39 28 984 A1 wird eine Scherkantensicherung für zwei längs einer Scherlinie aneinander vorbei bewegbare Teile beschrieben, die eine Sicherungsschaltung mit einem geschlossenen Stromkreis umfaßt, dessen Unterbrechung die Relativbewegung der beiden Teile, bei denen es sich um Podienteile handelt, abstoppt. Die Unterbrechung des Stromkreises wird dadurch erreicht, daß die Auslenkung der Barriere so groß wird, daß ein durch sie gesteuerter Verschwenkhebel zur Betätigung eines Endschalters einen vorgegebenen maximalen Verschwenkwinkel erreicht, bei dessen Eintreten die Abschaltung der Bewegung erfolgt. Diese bekannte Scherkantensicherung, bei der die Barriere an einer sich nach unten erstreckenden, straffen und flexiblen Bahn hängt, ist wohl für relativ zueinander verschwenkbare Podienteile geeignet, für einen besonderen Einsatz in lokalen Reinsträumen unter den Bedingungen, die durch sogenannte SMIF-Systeme (u. a. beschrieben in DE 43 26 309 C1) gefordert werden, jedoch viel zu platzaufwendig und zu ungenau. Außerdem kann sich ein in diesen SMIF-Systemen erforderlicher Luftstrom negativ auf die Zuverlässigkeit einer solchen Lösung auswirken. Bei derartigen Systemen ist insbesondere ein Eingreifen in den Bereich zu vermeiden, der sich zwischen einem oberen Rahmen und dem sich absenkenden oder aufwärts bewegenden, als Tisch wirkenden Boden befindet.

Es ist daher Aufgabe der Erfindung, eine Scherkantensicherung zu finden, die eine auch für die genannten SMIF-Systeme geeignete Sicherheitseinrichtung darstellt.

Erfindungsgemäß wird diese Aufgabe durch eine Scherkantensicherung mit den Merkmalen des Anspruchs 1 erreicht.

Vorteilhafterweise ist die Barriere mittels dreier in einer Reihe hintereinander angeordneter Befestigungsstellen am feststehenden Teil durch Führungsstifte in ihre Ausgangsstellung hin federnd abgestützt befestigt. Jeder Führungsstift trägt dabei ein Kontaktelement in Form einer Kontaktbrücke zur Ausbildung des geschlossenen Stromkreises, wobei eine Relativbewegung der Barriere zu dem feststehenden Teil hin den Stromkreis durch Lösen mindestens einer der Kontaktbrücken von Kontaktelementen stromkreisbildender Leitungen unterbricht.

Die Barriere kann auch an einem Ende eines Stiftes befestigt sein, der an seinem anderen Ende ein kugelförmiges Kontaktelement trägt, das auf innerhalb des feststehenden Teiles fest angeordneten Kontaktelementen zur Bildung des geschlossenen Stromkreises aufliegt. Zur Stabilisierung kann eine Druckfeder eingesetzt sein, mittels der das Kontaktelement gegen die anderen Kontaktelemente gedrückt wird.

Vorteilhafterweise kann die Barriere auch mit durch Leitungsbahnen verbundenen Kontaktelementen auf weiteren Kontaktelementen aufliegen, die an abgewinkelten Teilen des die Barriere tragenden Teiles angebracht sind.

Zur reproduzierbaren Halterung der Barriere ist es von Vorteil, die Kontaktelemente radial anzuordnen, so daß sich Kontaktmittellinien durch die Kontaktelemente in einem Kreismittelpunkt schneiden. Bei einer derartigen Anordnung sollten die Kontaktelemente aus zylinderförmigen Kontakten bestehen, die an benachbarte Teile einer unterbrochenen Leitungsbahn auf einer Leiterplatte angeschlossen sind und zwischen denen ein kugelförmiges Kontaktelement eine elektrische Verbindung herstellt, das über einen durch eine Öffnung in der Leiterplatte hindurchgeführten Führungsstift mit der Barriere in Verbindung steht.

Die Erfindung soll nachstehend anhand einer schematischen Zeichnung näher erläutert werden. Es zeigen:
- Fig. 1: einen Ausschnitt aus einer Anordnung mit einer erfindungsgemäßen Scherkantensicherung und mit aufliegender Barriere bei vertikaler Relativbewegung zweier Teile gegeneinander;
- Fig. 1a: eine vergrößerte Darstellung einer Befestigungsstelle aus Fig. 1;
- Fig. 2: einen Ausschnitt aus einem System mit hängender Barriere;
- Fig. 3: eine Anordnung von Leitungsbahnen und Kontaktelementen für eine Variante mit aufliegender Barriere;
- Fig. 4: eine erste Art der Befestigung der aufliegenden Barriere gemäß Fig. 3;
- Fig. 5: eine zweite Art der Befestigung der aufliegenden Barriere gemäß Fig. 3;
- Fig. 6: die Ausführung einer Befestigungsstelle, und
- Fig. 7: eine radiale Anordnung von Befestigungsstellen gemäß Fig. 6.

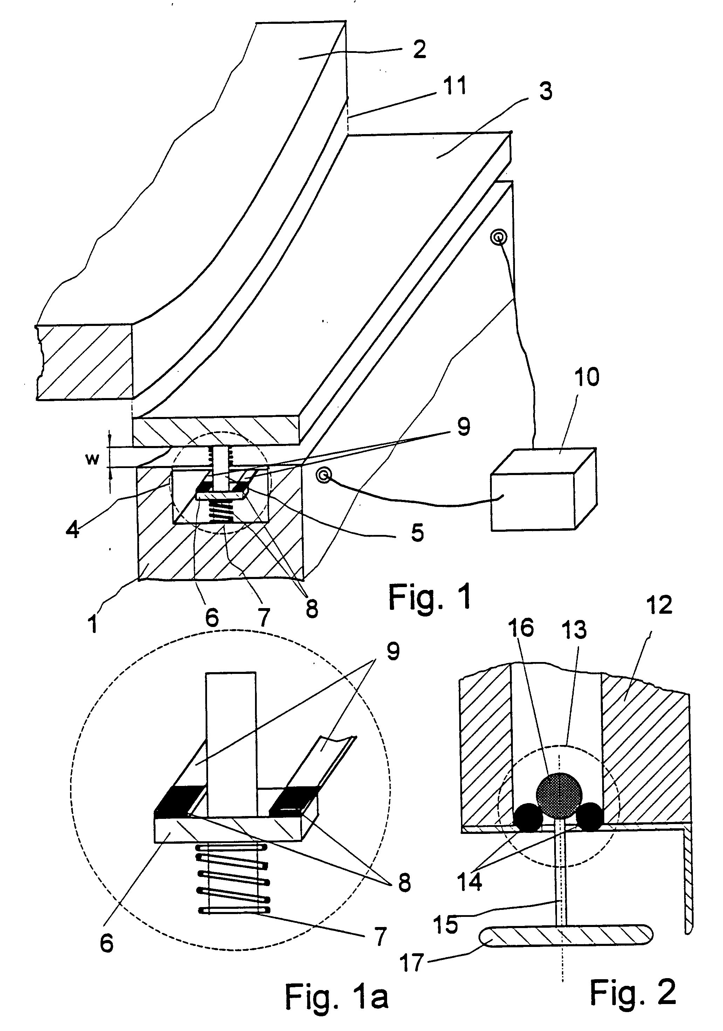

Entsprechend den Figuren 1 und 1a ist auf einem ersten, feststehenden Teil 1, gegenüber dem ein zweiter Teil 2 in vertikaler Richtung bewegbar ist, eine als fester Körper ausgebildete Barriere 3 mittels dreier in einer Reihe hintereinander angeordneter Befestigungsstellen 4 befestigt. Bei den Befestigungsstellen 4, von denen nur eine sichtbar ist, ist die Barriere 3 mit einem Führungsstift 5 verbunden, der ein Kontaktelement 6 trägt. Durch eine Feder 7 unterstützt wird des Kontaktelement 6 gegen Kontaktelemente 8 von Leitungen 9 gedrückt und schließt dadurch einen Stromkreis einer Sicherungsschaltung 10. Die Barriere 3 ist an einer als Scherlinie 11 wirkenden Seite in ihrer Form der des zweiten Teiles 2 angepaßt und derart angeordnet, daß beide zueinander passenden Formen sich aneinander vorbeibewegen können.

Befindet sich bei der Annäherung des zweiten Teiles 2 an den ersten Teil 1 ein Fremdkörper im Bereich der Scherlinie 11, so wird dieser nach der Berührung mit dem zweiten Teil 2 die Barriere 3 gegen das erste Teil 1 drücken. Im Ergebnis wird mindestens bei einer der Befestigungsstellen 4 die durch die Kontaktelemente 6 hergestellte Verbindung zwischen den Kontaktelementen 8 der Leitungen 9 unterbrochen. Die Sicherungsschaltung 10 setzt den Antrieb des zweiten Teils 2 außer Betrieb. Zum rechtzeitigen Halt ist der Abstand w größer gewählt als der Bremsweg, der erforderlich ist, um die Bewegung zu stoppen.

In einer weiteren Ausführung gemäß Fig. 2 sind innerhalb eines feststehenden ersten Teiles 12 Befestigungsstellen 13 vorgesehen, die aus fest angeordneten Kontaktelementen 14 bestehen, auf denen ein vorzugsweise kugelig ausgebildetes, auf einem Stift 15 befestigtes Kontaktelement 16 aufliegt. Der Stift 15 ist mit einer Barriere 17 verbunden, so daß diese am ersten Teil 12 hängt. Im Bedarfsfall kann zur Stabilisierung dieses Systems eine Druckfeder eingesetzt werden, die das Kontaktelement 16 gegen die Kontaktelemente 14 drückt.

Die Ausführung gemäß Fig. 2 ist für solche technischen Lösungen geeignet, bei denen ein in dieser Figur nicht dargestellter beweglicher zweiter Teil entsprechend der Zeichnung sich von unten auf den ersten Teil 12 zubewegt. Ein zwischen den sich gegeneinander vorbeibewegenden Teilen befindlicher Fremdkörper wird gegen die Barriere 17 gedrückt, so daß das Kontaktelement 16 von den Kontaktelementen 14 abhebt.

Die beiden Varianten der aufliegenden bzw. der hängenden Barriere gestatten es natürlich, im Bedarfsfall die Barriere auch am beweglichen Teil anzubringen.

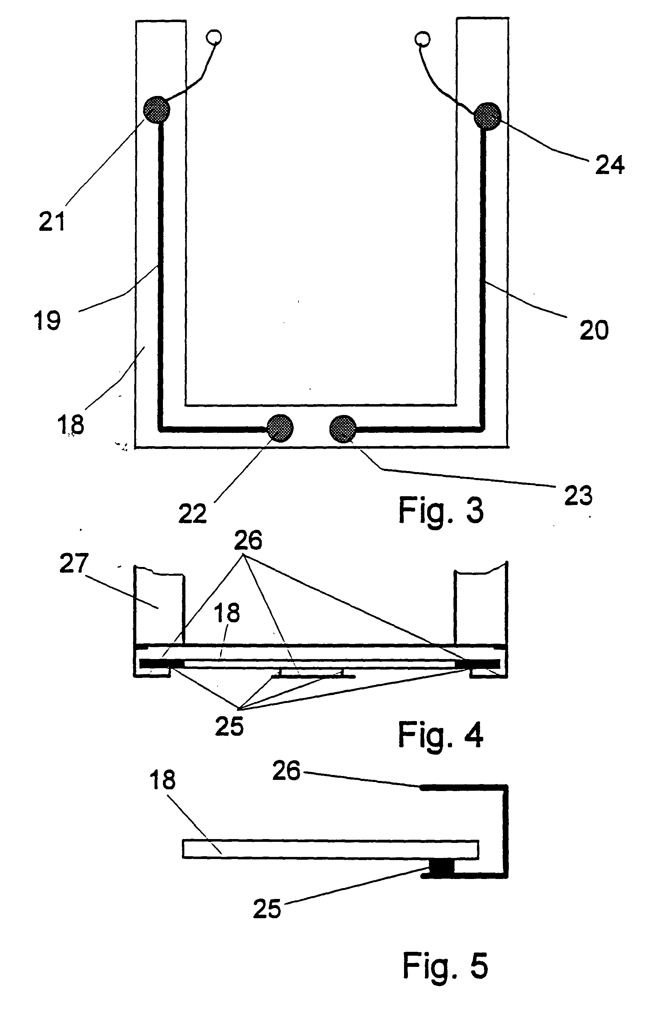

Bei der in den Figuren 3 bis 5 dargestellten erfindungsgemäßen Lösung ist eine aufliegend benutzbare Barriere 18 vorgesehen, die durch Leitungsbahnen 19, 20 verbundene Kontaktelemente 21, 22, 23, 24 trägt. Die Kontaktelemente 21, 22, 23 und 24 liegen auf Kontaktelementen 25 von abgewinkelten Teilen 26 eines feststehenden ersten Teils 27 auf. Komplettierende Zuleitungen zu den Kontaktelementen 25 sind nicht dargestellt. Bei dieser Variante der aufliegenden Barriere 18 bewirkt deren Anheben die Kontaktunterbrechung und einen Halt des sich bewegenden Teiles.

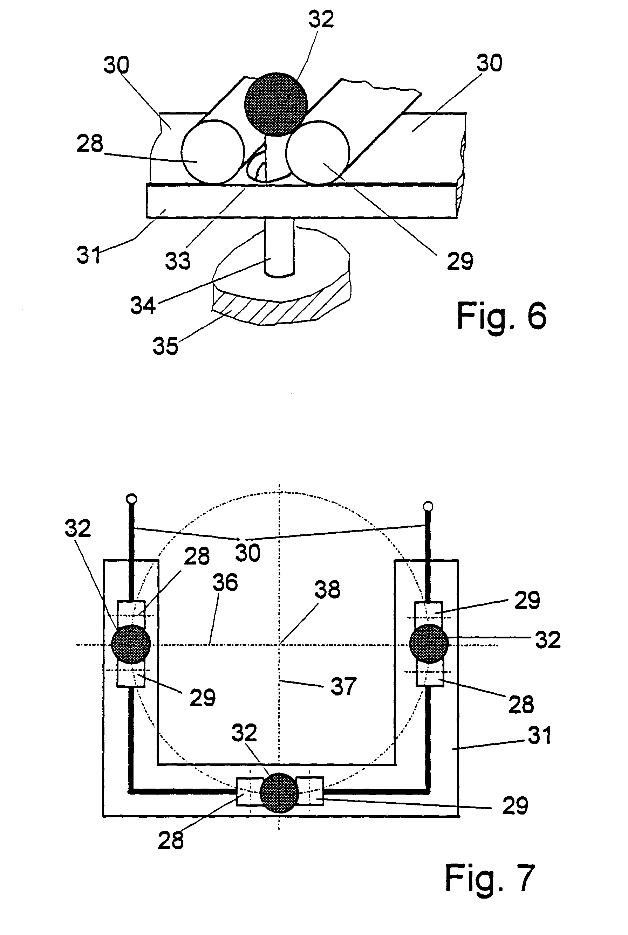

Die Ausführung einer Befestigungsstelle gemäß Fig. 6 sieht zylinderförmige Kontaktelemente 28, 29 vor, die an benachbarten Teilen einer unterbrochenen Leitungsbahn 30 auf einer Leiterplatte 31 Anschluß haben. Die elektrische Verbindung zwischen den Kontaktelementen 28, 29 und damit der benachbarten Teile der Leitungsbahn 30 wird mit einem kugelförmigen Kontaktelement 32 hergestellt, das über einen, durch eine Öffnung 33 in der Leiterplatte 31 hindurchgeführten Führungsstift 34 mit einer Barriere 35 in Verbindung steht.

In Fig. 7 sind Befestigungsstellen nach Fig. 6 zur reproduzierbaren Halterung der Barriere 35 radial angeordnet, so daß sich Kontaktmittellinien 36, 37 in einem Kreismittelpunkt 38 schneiden.

## Patentansprüche

1. Scherkantensicherung für zwei längs einer Scherlinie (11) aneinander vorbei bewegbare Teile (1, 2, 12), mit einer Sicherungsschaltung, die einen geschlossenen Stromkreis umfaßt, der bei Vorhandensein eines Fremdkörpers in der Scherlinie (11) im Bereich der Annäherung der beiden Teile (1, 2, 12) aneinander durch Auslenkung eines an dem einem Teil (1; 12) angebrachten, durch den Fremdkörper relativ zu diesem Teil bewegbaren, als fester Körper ausgebildeten Elementes (3; 17; 18; 30) aus einer Ausgangsstellung unterbrochen werden kann und dabei die Relativbewegung beider Teile zueinander abstoppt, wobei das bewegbare Element als eine in ihrer Form und Position an die Scherlinie (11) im wesentlichen angepaßte Barriere (3; 17; 18; 35) ausgebildet ist, die in einem Abstand, der größer als der maximale Bremsweg (w) zum Abstoppen der Relativbewegung ist, von dem sie tragenden Teil (1, 12, 30) entfernt angebracht und an diesem, in Richtung auf dieses Teil hin bewegbar, über Befestigungsstellen (4; 13) befestigt ist, die eine Dreipunktformation bilden und deren jede ein mit der Barriere (3; 17; 18; 35) verbundenes Kontaktelement (6; 16; 21-24; 32) sowie an dem die Barriere (3, 17, 18, 35) tragenden Teil (1; 12; 30) angebrachte weitere Kontaktelemente (8; 14; 25; 28, 29) umfaßt, wobei an jeder Befestigungsstelle in der Ausgangsstellung der Barriere (3; 17; 18; 35) das mit der Barriere (3; 17; 18; 32) verbundene Kontaktelement (6; 16; 21-24; 32) mit den weiteren Kontaktelementen (8; 14; 25; 28, 29) in Kontakt steht und bei einer Annäherung der Barriere (3; 17; 18; 35) an das sie tragende Teil (1; 12; 30) an mindestens einer Befestigungsstelle außer Berührung mit diesen weiteren Kontaktelementen bringbar und damit zum Abstoppen der Relativbewegung der beiden Teile (1, 2) zueinander der Stromkeis der Sicherungsschaltung unterbrechbar ist.

2. Scherkantensicherung nach Anspruch 1, bei der die Barriere (3) mittels dreier in einer Reihe hintereinander angeordneter Befestigungsstellen (4) am feststehenden Teil (1) durch Führungsstifte (5) in ihre Ausgangsstellung hin federnd vorgespannt befestigt ist, und jeder Führungsstift (5) ein Kontaktelement in Form einer Kontaktbrücke (6) zur Ausbildung des geschlossenen Stromkreises trägt, wobei eine Relativbewegung der Barriere (3) zu dem feststehenden Teil (1) hin den Stromkreis durch Lösen mindestens einer der Kontaktbrücken (6) von Kontaktelementen (8) stromkreisbildender Leitungen (9) unterbricht.

3. Scherkantensicherung nach Anspruch 1, bei der die Barriere (17) an einem Ende eines Stiftes (15) befestigt ist, der an seinem anderen Ende ein kugelförmiges Kontaktelement (16) trägt, das auf innerhalb des feststehenden Teiles (12) fest angeordneten Kontaktelementen (14) zur Bildung des geschlossenen Stromkreises aufliegt.

4. Scherkantensicherung nach Anspruch 3, bei der das Kontaktelement (16) mittels einer Druckfeder gegen die Kontaktelemente (14) gedrückt wird.

5. Scherkantensicherung nach Anspruch 1, bei der die Barriere (18) mit durch Leitungsbahnen (19, 20) verbundenen Kontaktelementen (21, 22, 23, 24) auf weiteren Kontaktelementen (25) aufliegt, die an abgewinkelten Teilen (26) des die Barriere (18) tragenden Teiles (27) angebracht sind.

6. Scherkantensicherung nach Anspruch 1, bei der die Kontaktelemente (32) auf einer Kreisbahn liegend angeordnet sind.

7. Scherkantensicherung nach Anspruch 6, bei der die Kontaktelemente aus zylinderförmigen Kontakten (28, 29) bestehen, die an benachbarte Teile einer unterbrochenen Leitungsbahn (30) auf einer Leiterplatte (31) angeschlossen sind und zwischen denen ein kugelförmiges Kontaktelement (32) eine elektrische Verbindung herstellt, das über einen durch eine Öffnung (33) in der Leiterplatte (31) hindurchgeführten Führungsstift (34) mit der Barriere (35) in Verbindung steht.

## Claims

1. Shear edge safety mechanism for two components, which are movable past one another along a shear line (11), including a safety circuit, which includes a closed current circuit, which can be interrupted when a foreign body is present in the shear line (11) in the region of the approach of the two components (1,2,12) to one another by deflecting an element (3;17;18;30), which is mounted on the one component (1;12), is movable by the foreign body relative to this component and is constructed as a solid body, out of a starting position and thus stops the relative movement of the two components with respect to one another, whereby the movable element is constructed in the form of a barrier (3;17;18;35), whose shape and position is substantially matched to the shear line (11) and which is mounted at a distance, which is greater than the maximum braking distance (w) for stopping the relative movement, from the component (1,12,30) carrying it and is connected to it, so as to be movable in the direction towards this component, by means of connecting points (4;13), which form a three-point formation and each of which includes a contact element (6;16;21-24;32) connected to the barrier (3;17;18;35) and further contact elements (8;14;25;28,29) mounted on the component (1;12;30) carrying the barrier (3,17,18,35), whereby on each connecting point in the starting position of the barrier (3;17;18;35) the contact element (6;16;21-24;32) connected to the barrier (3;17;18;32) is in contact with the further contact elements (8;14;25;28,29) and when the barrier (3;17;18;35) approaches the component (1;12;30) carrying it is movable at at least one connecting point out of contact with these further contact elements and the current circuit of the safety circuit may thus be interrupted to stop the relative movement of the two components (1,2) towards one another.

2. Shear edge safety mechanism as claimed in claim 1, in which the barrier (3) is connected resiliently biased in its starting position to the fixed component (1) by guide pegs (5) by means of three connecting points (4) arranged in a row behind one another and each guide peg (5) carries a contact element in the form of a contact bridge (6) to form the closed current circuit, whereby relative movement of the barrier (3) towards the fixed component (1) interrupts the current circuit by separating at least one of the contact bridges (6) from contact elements (8) of lines (9) forming the current circuit.

3. Shear edge safety mechanism as claimed in claim 1, in which the barrier (17) is connected at one end of a peg (15), the other end of which carries a spherical contact element (16), which engages contact elements (14), which are fixedly arranged within the stationary portion (12), to form the closed current circuit.

4. Shear edge safety mechanism as claimed in claim 3, in which the contact element (16) is pressed against the contact elements (14) by means of a compression spring.

5. Shear edge safety mechanism as claimed in claim 1, in which the barrier (18) rests with contact elements (21,22,23,24), connected by conductive tracks (19,20), on further contact elements (25), which are mounted on angled portions (26) of the component (27) carrying the barrier (18).

6. Shear edge safety mechanism as claimed in claim 1, in which the contact elements (32) are arranged lying on a circular path.

7. Shear edge safety mechanism as claimed in claim 6, in which the contact elements comprise cylindrical contacts (28,29), which are connected to adjacent portions of an interrupted conductive track (30) on a printed circuit board (31) and between which a spherical contact element (32) produces an electrical connection, which is connected to the barrier (35) by means of a guide peg (34) passing through an opening (33) in the printed circuit board (31).

## Revendications

1. Dispositif de sécurité d'arêtes de cisaillement pour deux pièces (1, 2, 12), déplaçables l'une devant l'autre le long d'une ligne de cisaillement (11), comportant un circuit de sécurité, qui comprend un circuit fermé et qui, en présence d'un corps étranger dans la ligne de cisaillement (11), peut être interrompu, dans la zone de l'approche des deux pièces (1, 2, 12), par déviation d'un élément (3 ; 17 ; 18 ; 30) conformé en corps fixe, fixé à une pièce (1 ; 12) et déplaçable au moyen du corps étranger, par rapport à cette pièce, à partir d'une position initiale, et ce faisant stoppe le déplacement relatif des deux pièces, l'élément déplaçable étant réalisé en tant que barrière (3 ; 17 ; 18 ; 35) sensiblement adaptée dans sa forme et sa position à la ligne de cisaillement (11) et qui est placée éloignée de la pièce (1, 12, 30) qui la supporte, à une distance qui est supérieure à la course de freinage maximale (w) nécessaire pour stopper le déplacement relatif, et qui est fixée à cette pièce, de manière à pouvoir se déplacer en direction de celle-ci, par l'intermédiaire de points de fixation (4 ; 13) qui constituent une fixation à trois points et dont chacun comprend un élément de contact (6 ; 16 ; 21-24 ; 32) relié à la barrière (3 ; 17 ; 18 ; 35), ainsi que d'autres éléments de contact (8 ; 14 ; 25 ; 28, 29) placés sur la pièce (1; 12 ; 30) qui supporte la barrière (3, 17, 18, 35), en tout point de fixation, en position initiale de la barrière (3 ; 17 ; 18 ; 35), l'élément de contact (6 ; 16 ; 21-24 ; 32) relié à la barrière (3 ; 17 ; 18 ; 35), étant en contact avec les autres éléments de contact (8 ; 14 ; 25 ; 28, 29), et lorsque la barrière (3 ; 17 ; 18 ; 35) s'approche de la pièce (1 ; 12 ; 30) qui la supporte, ledit élément de contact pouvant être amené hors contact, en au moins un point de fixation, d'avec ces autres éléments de contact, et le circuit électrique du circuit de sécurité pouvant être ainsi interrompu pour stopper le déplacement relatif des deux pièces (1, 2) l'une par rapport à l'autre.

2. Dispositif de sécurité d'arêtes de cisaillement selon la revendication 1, dans lequel la barrière (3) est fixée, avec une précontrainte élastique vers sa position initiale, au moyen de trois points de fixation (4), disposés l'un derrière l'autre en une rangée, sur la pièce fixe (1), au moyen de doigts de guidage (5), et chaque doigt de guidage (5) supporte un élément de contact sous la forme d'un pont de contact (6) destiné à former le circuit fermé, un déplacement relatif de la barrière (3) par rapport à la pièce fixe (1) interrompant le circuit par suppression d'au moins l'un des ponts de contact (6) d'éléments de contact (8) de lignes (9) formant le circuit électrique.

3. Dispositif de sécurité d'arêtes de cisaillement selon la revendication 1, dans lequel la barrière (17) est fixée à une extrémité d'une broche (15) qui porte, à son autre extrémité, un élément de contact (16) sphérique, qui repose sur des éléments de contact (14) disposés fixement à l'intérieur de la pièce fixe (12), pour former le circuit électrique fermé.

4. Dispositif de sécurité d'arêtes de cisaillement selon la revendication 3, dans lequel l'élément de contact (16) est pressé contre les éléments de contact (14), au moyen d'un ressort de compression.

5. Dispositif de sécurité d'arêtes de cisaillement selon la revendication 1, dans lequel la barrière (18) repose, par d'autres éléments de contact (21, 22, 23, 24) reliés par des pistes conductrices (19, 20), sur d'autres éléments de contact (25), qui sont fixés à des parties coudées (26), de la pièce (27) qui supporte la barrière (18).

6. Dispositif de sécurité d'arêtes de cisaillement selon la revendication 1, dans lequel les éléments de contact (32) sont disposés à plat sur une trajectoire circulaire.

7. Dispositif de sécurité d'arêtes de cisaillement selon la revendication 6, dans lequel les éléments de contact sont constitués de contacts (28, 29) de forme cylindrique, qui sont raccordés à des parties voisines d'une piste conductrice (30) interrompue sur une plaquette de circuits imprimés (31), et entre lesquels un élément de contact (32) sphérique réalise une liaison électrique, qui est en liaison avec la barrière (35) par un doigt de guidage (34) qui traverse une ouverture (33) de la plaquette de circuits imprimés (31).
